# EUROPÄISCHE PATENTSCHRIFT

(11) **EP 2 304 266 B1**
(45) Veröffentlichungstag und Bekanntmachung des Hinweises auf die Patenterteilung: **25.01.2012**
(21) Anmeldenummer: 09777397.2
(22) Anmeldetag: 23.07.2009
(51) Int. Cl.: F16D 66/00, F16D 66/02

(54) **SCHEIBENBREMSE, INSBESONDERE FÜR EIN NUTZFAHRZEUG**
DISC BRAKE, ESPECIALLY FOR A COMMERCIAL VEHICLE
FREIN À DISQUE, EN PARTICULIER POUR VÉHICULE UTILITAIRE

(30) Priorität: 25.07.2008 DE 102008034653
(43) Veröffentlichungstag der Anmeldung: 06.04.2011
(73) Patentinhaber: Knorr-Bremse Systeme für Nutzfahrzeuge GmbH, 80809 München (DE)
(72) Erfinder: GRUBER, Markus, 85560 Ebersberg (DE); RENO, Thomas, Strongsville, OH 44136 (US)
(74) Vertreter: Mattusch, Gundula
(86) Internationale Anmeldenummer: PCT/EP2009/005356
(87) Internationale Veröffentlichungsnummer: WO 2010/009885

(56) Entgegenhaltungen:
- DE-A1- 10 201 901
- US-A- 3 961 690
- US-A- 4 850 454
- US-A1- 2007 012 525
- US-B1- 6 213 254

## Beschreibung

Die Erfindung betrifft eine Scheibenbremse, insbesondere für ein Nutzfahrzeug, nach dem Oberbegriff des Anspruchs 1, wie z.B. aus US-A-2007/012525 oder DE-C-36 12 166 bekannt.

Vor allem aus Gründen der Betriebssicherheit einer Scheibenbremse und letztendlich auch des Fahrzeuges, in das die Scheibenbremse eingebaut ist, ist es erforderlich, den Verschleiß der Bremsbeläge zu überwachen, so dass ein notwendiger Austausch des jeweiligen Bremsbelags zu einem bestmöglichen Zeitpunkt erfolgt. Dabei soll der Verschleißzustand der Bremsbeläge, d.h., die Abnutzung des jeweiligen Reibbelags, der mit einer Belagträgerplatte verbunden ist, zuvor möglichst genau festgestellt werden.

Vor allem aus betriebswirtschaftlicher Sicht besteht eine Forderung nach einem optimalen Zeitpunkt des Austausches der Bremsbeläge. Anzustreben ist dabei, einen Austausch erst dann vorzunehmen, wenn der Reibbelag bis auf eine zulässige Minimaldicke abgenutzt ist. Ein früherer Austausch würde einer Optimierung der ersatzbedingten Betriebskosten entgegenstehen, während ein zu später Austausch eine Beeinträchtigung der Funktionssicherheit der Scheibenbremse insgesamt mit sich brächte.

Zur Erkennung des Verschleißzustandes der Bremsbeläge sind verschiedene Maßnahmen bekannt.

So kann eine Verschleißermittlung des Reibbelages elektronisch erfolgen, wobei durch die Belagträgerplatte ein stromleitendes Kabel geführt wird, das bei Verschleiß des Reibbelages durchtrennt wird und ein erkennbares Signal an einen Signalgeber gibt, beispielsweise im Fahrerhaus des Kraftfahrzeuges.

Daneben sind Verschleißanzeigen bekannt, die mittels eines Drehpotentiometers eine bei einer Nachstellung der Bremsbeläge zum Ausgleich eines Verschleißhubes sich ergebende Verfahrstrecke einer Nachstelleinrichtung ermitteln, die gleichfalls, beispielsweise durch den Fahrer des Fahrzeuges, anhand einer entsprechenden Anzeigeeinrichtung erkennbar ist.

Zur visuellen Erkennung des Verschleißzustandes der Bremsbeläge bzw. der Bremsscheibe ist es aus der DE 36 12 166 C2 bekannt, den Bremsträger mit einer Markierung zu versehen, die in Korrespondenz mit einer entsprechend modifizierten Belagträgerplatte der Verschleißerkennung dient.

Dabei werden die bremsträgerseitigen Markierungen durch eine entsprechende Formgebung hergestellt, insbesondere durch U- oder V-förmige Ausnehmungen im Sinne von Kerben.

Naturgemäß haben solche Ausnehmungen, aber auch andere notwendige Formgebungen Einfluss auf die Festigkeit des Bremsträgers, wobei vor allem die Kerben zu einer Minderung der Dauerbruchfestigkeit führen.

Allen Einrichtungen zur Verschleißerkennung gemeinsam ist, dass sie im Wesentlichen nur bei demontiertem Fahrzeugrad erkennbar sind, was einer optimierten Verwendung der Einrichtung entgegensteht.

Der Erfindung liegt die Aufgabe zugrunde, eine Scheibenbremse der gattungsgemäßen Art so weiterzuentwickeln, dass sie mit geringem konstruktiven Aufwand eine einfachere visuelle Verschleißerkennung ermöglicht.

Diese Aufgabe wird durch eine Scheibenbremse mit den Merkmalen des Anspruchs 1 gelöst.

Wesentlich ist, dass die Verschleißerkennung nun ohne Veränderung des Bremsträgers bzw. anderer Bauteile der Scheibenbremse möglich ist. Dabei ist das Zeigerelement, das sich erfindungsgemäß in die zur Bremsscheibe entgegengesetzte Richtung erstreckt, als separates Teil ausgebildet und am Bremsträger befestigt. Bevorzugt erfolgt dies an Befestigungsschrauben, mit denen der Bremsträger am fahrzeugseitigen Achsanschluss verbunden ist.

Die Befestigung des Zeigerelementes an einer oder mehrerer der Schrauben kann durch Reib- und/oder Formschluss erfolgen, wobei im ersteren Fall das Zeigerelement eine Steckhülse aufweist, die auf einen Schraubenkopf der Schrauben aufgepresst wird.

Das Zeigerelement steht in sichtbarer Korrespondenz zu einer im Bremssattel gehaltenen Führungshülse, die sich zusammen mit dem Bremssattel, je nach Verschleißgrad des Bremsbelages und/oder der Bremsscheibe relativ zu dem Zeigerelement bewegt.

Der sich dabei verändernde Abstand zwischen einer Begrenzungskante des Zeigerelementes und der freien Stirnseite der Führungshülse kann visuell von außen erkannt werden, ohne dass das Fahrzeugrad demontiert werden muss. Dieser Umstand stellt gegenüber dem Stand der Technik eine wesentliche Verbesserung dar, da praktisch zu jedem Zeitpunkt eine Verschleißkontrolle durchgeführt werden kann, was natürlich zu einer Erhöhung der Betriebssicherheit führt.

Nach einem vorteilhaften Gedanken der Erfindung ist vorgesehen, dass das Zeigerelement mit zumindest einer Markierung, vorzugsweise einer Strich-Markierung versehen ist, die eine besonders einfache Verschleißerkennung ermöglicht und die dauerhaft aufgebracht ist, so dass sie auch durch Witterungseinflüsse nicht unkenntlich wird.

Das Zeigerelement kann, statt an der erwähnten einen auch an zwei Presshülsen befestigt sein, die nebeneinander liegen und jeweils auf einen Schraubenkopf aufgepresst sind, wodurch eine Verdrehsicherung der Schrauben erreicht wird, die verhindert, dass sich die Schrauben durch betriebsbedingte Erschütterungen lösen. Das Zeigerelement kann nach einem weiteren Gedanken durch eine Zeigerhülse gebildet sein, die auf einen Schraubenkopf aufgesteckt ist und dort verliergesichert gehalten ist, beispielsweise mittels einer seitlichen Feststellschraube, die in die Zeigerhülse eingedreht ist und diese gegen den Schraubenkopf verpresst. Hervorzuheben ist des Weiteren, dass das Zeigerelement besonders preiswert herzustellen und prinzipiell universell einsetzbar ist. Vor allem ist eine nachträgliche Bestückung einer bereits montierten Scheibenbremse problemlos möglich, wobei das Zeigerelement so ausgebildet ist, dass es sowohl an der einen, wie an der anderen Seite der Befestigung des Bremsträgers am Achsanschluss angeschlossen sein kann.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel einer erfindungsgemäßen Scheibenbremse in einer perspektivischen Ansicht
- Figur 2: die Scheibenbremse in einer Seitenansicht
- Figur 3: eine Einzelheit der Scheibenbremse nach den Figuren 1 und 2 in einer perspektivischen Darstellung
- Figur 4: ein weiteres Ausführungsbeispiel einer erfindungsgemäßen Scheibenbremse, gleichfalls in einer perspektivischen Ansicht
- Figur 5: eine Einzelheit der Scheibenbremse nach Figur 4 in einer schaubildlichen Ansicht.

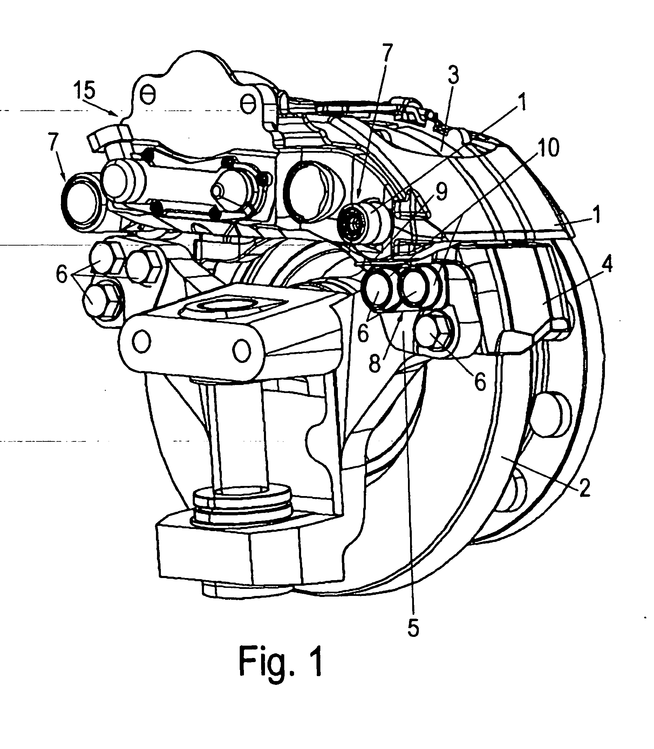

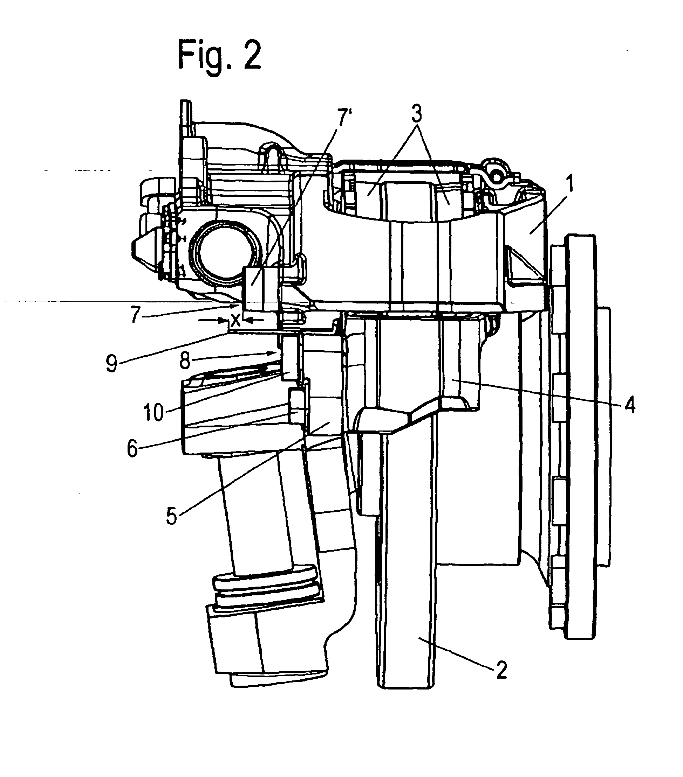

In den Figuren 1, 2 und 4 ist jeweils eine Scheibenbremse für ein Nutzfahrzeug dargestellt, mit einem Bremssattel 1, der an einem an einem fahrzeugseitigen Achsanschluss 5 mit Schrauben 6 befestigten Bremsträger 4 mittels Führungselementen 7 verschiebbar gehalten ist.

Dieser Bremssattel 1 umfasst eine Bremsscheibe 2, an die bei einer Bremsung beidseitig Bremsbeläge 3 anpressbar sind. Hierzu ist eine Zuspanneinrichtung 15 vorgesehen, die pneumatisch oder elektromotorisch betreibbar ist.

Zumindest der zuspannseitige Bremsbelag 3 ist in einem Belagschacht des Bremsträgers 4 in Richtung der Bremsscheibe 2 verschiebbar gelagert.

Die Schrauben 6, mit denen der Bremsträger 4 am Achsanschluss 5 befestigt ist, liegen mit ihren Köpfen an der dem Bremsträger 4 abgewandten Seite des Achsanschlusses 5 an, während sie in Gewindebohrungen des Bremsträgers 4 eingedreht sind.

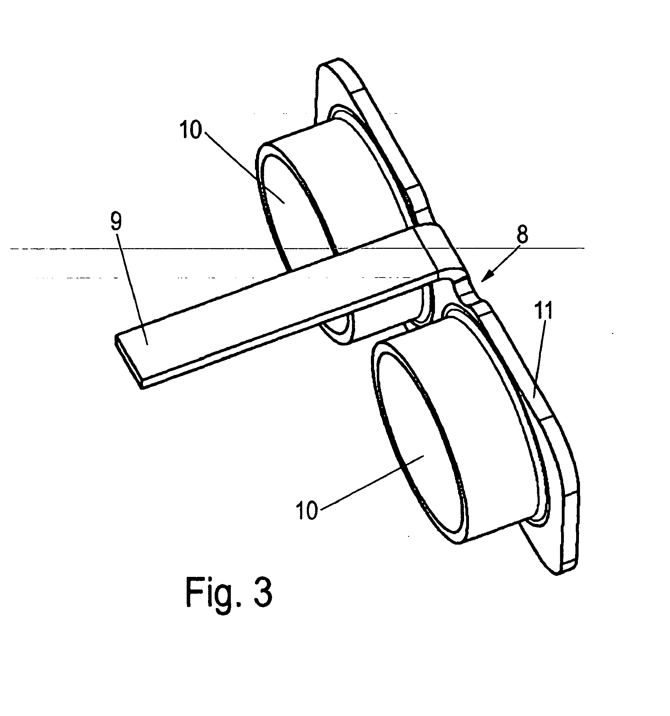

Erfindungsgemäß ist an zumindest einer der Schrauben 6 ein Zeigerelement 8 angeschlossen, das im Ausführungsbeispiel nach den Figuren 1 bis 3 zwei Presshülsen 10 aufweist, die über eine angeformte Platte 11 (Figur 3) miteinander verbunden sind und die auf zwei Köpfe nebeneinander liegender Schrauben 6 aufgepresst sind.

An der Platte 11 ist ein Zeigerstift 9 angeformt, der sich entgegengesetzt zur Verschieberichtung des Bremssattels 1 erstreckt. In Korrespondenz mit einer im Bremssattel 1 befestigten Führungshülse 7', die Bestandteil des zugeordneten Führungselementes 7 ist, bildet der parallel zur Führungshülse 7' verlaufende Zeigerstift 9 eine Verschleißerkennung. Da sich bei zunehmendem Verschleiß der Bremsbeläge 3 sowie der Bremsscheibe 2 der Bremssattel 1 in Erstreckungsrichtung des Zeigerstiftes 9 verschiebt, verkleinert sich auch der Abstand X der freien Endkante des Zeigerstiftes 9 zur Stirnseite der Führungshülse 7', der dann als Maß für den eingetretenen Verschleiß erkennbar ist.

Das Zeigerelement 8, d.h., die Platte 11, die Presshülsen 10 sowie der Zeigerstift 9 können einstückig aus Metall oder einem geeigneten Kunststoff geformt sein.

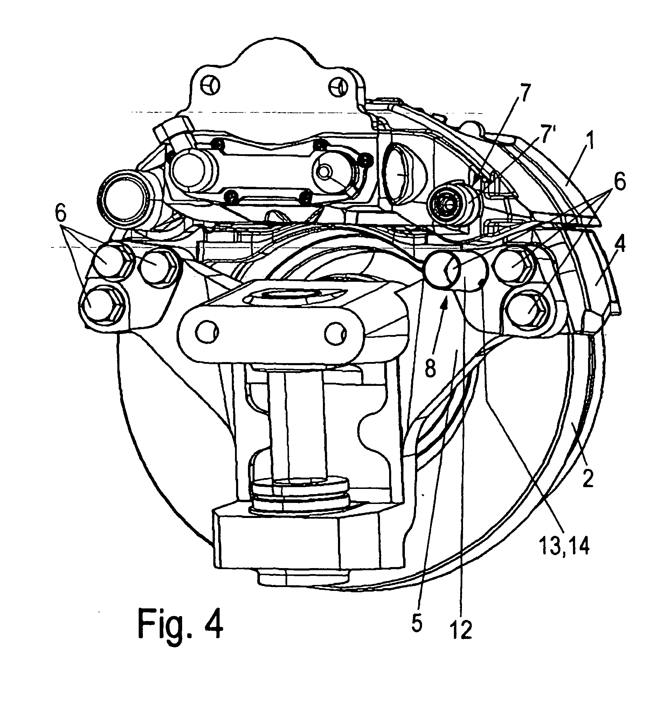

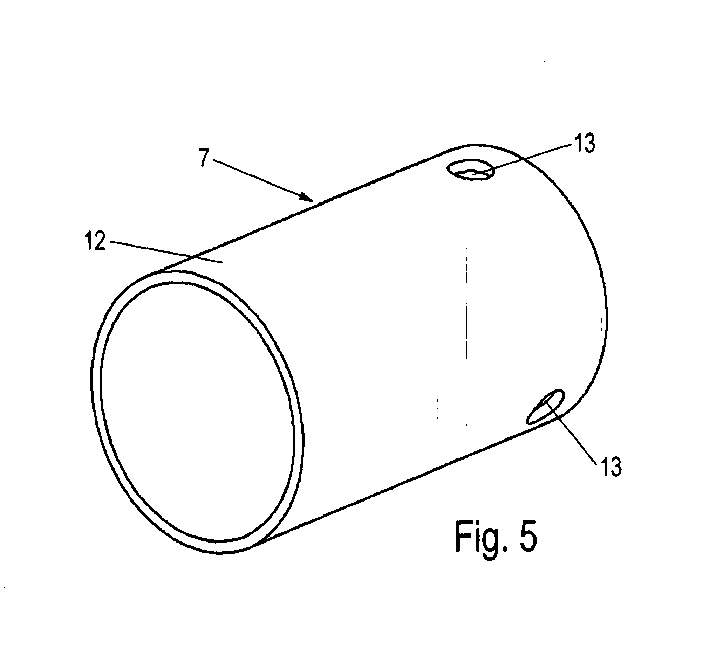

Bei dem in den Figuren 4 und 5 gezeigten Beispiel besteht das Zeigerelement 8 aus einer Zeigerhülse 12, die auf einen der Schraubenköpfe aufgesteckt ist und mittels einer Klemmschraube 14, die in eine seitliche Gewindebohrung eingedreht ist, verdreh- und verschiebegesichert am Kopf der Schraube 6 gehalten ist.

### Bezugszeichenliste

1 Bremssattel
2 Bremsscheibe
3 Bremsbelag
4 Bremsträger
5 Achsanschluss
6 Schraube
7 Führungselement 7' Führungshülse
8 Zeigerelement
9 Zeigerstift
10 Presshülse
11 Platte
12 Zeigerhülse
13 Gewindebohrung
14 Klemmschraube
15 Zuspanneinrichtung

## Patentansprüche

1. Scheibenbremse, mit einem Aufnahmeraum für einen eine Zuspanneinrichtung (15) aufweisenden Bremssattel (1), der an einem an einem fahrzeugseitigen Achsanschluss (5) mit Schrauben (6) befestigten Bremsträger (4) mittels Führungselementen (7) verschiebbar gehalten ist und der eine Bremsscheibe (2) umfasst, an die bei einer Bremsung beidseitig Bremsbeläge (3) anpressbar sind, wobei zumindest der zuspannseitige Bremsbelag (3) in einem Belagschacht des Bremsträgers (4) in Richtung der Bremsscheibe (2) verschiebbar gelagert ist, und mit einer Einrichtung zur visuellen Verschleißerkennung eines Bremsbelag- und/oder Bremsscheiben-Verschleißes, **dadurch gekennzeichnet, dass** zur Verschleißerkennung an zumindest einer Schraube (6) ein sich in die zur Bremsscheibe (2) entgegengesetzte Richtung erstreckendes Zeigerelement (8) angeschlossen ist.

2. Scheibenbremse nach Anspruch 1, **dadurch gekennzeichnet, dass** das Zeigerelement an einem Kopf der Schraube (6) befestigt ist.

3. Scheibenbremse nach Anspruch 1 oder 2, **dadurch gekennzeichnet, dass** das Zeigerelement (8) form- oder reibschlüssig am Kopf der Schraube (6) gehalten ist.

4. Scheibenbremse nach einem der vorhergehenden Ansprüche, **dadurch gekennzeichnet, dass** das Zeigerelement (8) mindestens eine Presshülse (10) aufweist, die auf den Kopf der Schraube (6) aufgepresst ist.

5. Scheibenbremse nach einem der vorhergehenden Ansprüche, **dadurch gekennzeichnet, dass** zwei Presshülsen (10) an einer Platte (11) befestigt sind, wobei die Presshülsen (10) auf die Köpfe zweier nebeneinander liegender Schrauben (6) aufgepresst sind.

6. Scheibenbremse nach einem der vorhergehenden Ansprüche, **dadurch gekennzeichnet, dass** an eine Presshülse (10) oder die Platte (11) ein Zeigerstift (9) angeformt ist, der sich entgegen der Zuspannrichtung der Bremsbeläge (3) erstreckt.

7. Scheibenbremse nach einem der vorhergehenden Ansprüche, **dadurch gekennzeichnet, dass** das Zeigerelement (8) als Zeigerhülse (12) ausgebildet ist, die auf den Kopf einer Schraube (6) aufgesteckt ist.

8. Scheibenbremse nach Anspruch 7 **dadurch gekennzeichnet, dass** die Zeigerhülse (12) mittels einer Klemmschraube (14) am Kopf der Schraube (6) verschiebe- und verdrehgesichert gehalten ist.

9. Scheibenbremse nach einem der Ansprüche 6 bis 8, **dadurch gekennzeichnet, dass** der Zeigerstift (9) oder die Zeigerhülse (12) Markierungen, vorzugsweise Strichmarkierungen aufweisen.

10. Scheibenbremse nach einem der Ansprüche 6 bis 9, **dadurch gekennzeichnet, dass** der Zeigerstift (9) oder die Zeigerhülse (12) parallel zu einer im Bremssattel (1) gehaltenen Führungshülse (7') eines zugeordneten Führungselementes (7) verlaufen.

## Claims

1. Disc brake with a space for accommodating a brake calliper (1) having an application device (15), which brake calliper (1) is held slidably by means of guiding elements (7) on a brake support (4), which is fixed with screws (6) to an axle connection (5) on the vehicle side, and comprises a brake disc (2), against which brake pads (3) can be pressed from both sides during a braking operation, at least the brake pad (3) on the application side being mounted in a pad well of the brake support (4) in such a way that it can be made to slide in the direction of the brake disc (2), and with a device for the visual wear detection of brake pad and / or brake disc wear, **characterised in that**, for detecting wear, a pointer element (8) extending in the opposite direction to the brake disc (2) is connected to at least one screw (6).

2. Disc brake according to claim 1, **characterised in that** the pointer element is fixed to a head of the screw (6).

3. Disc brake according to claim 1 or 2, **characterised in that** the pointer element (8) is held by positive or frictional engagement on the head of the screw (6).

4. Disc brake according to one of the preceding claims, **characterised in that** the pointer element (8) has at least one press-fit sleeve (10), which is pressed onto the head of the screw (6).

5. Disc brake according to one of the preceding claims, **characterised in that** two press-fit sleeves (10) are fixed on a plate (11), the press-fit sleeves (10) being pressed onto the heads of two mutually adjacent screws (6).

6. Disc brake according to one of the preceding claims, **characterised in that** a pointer pin (9), which extends counter to the direction of application of the brake pads (3), is formed on a press-fit sleeve (10) or the plate (11).

7. Disc brake according to one of the preceding claims, **characterised in that** the pointer element (8) is designed as a pointer sleeve (12), which is pushed onto the head of a screw (6).

8. Disc brake according to claim 7, **characterised in that** the pointer sleeve (12) is held on the head of the screw (6) in a manner secured against sliding and twisting by means of a clamping screw (14).

9. Disc brake according to one of the claims 6 to 8, **characterised in that** the pointer pin (9) or the pointer sleeve (12) have markings, preferably marking stripes.

10. Disc brake according to one of the claims 6 to 9, **characterised in that** the pointer pin (9) or the pointer sleeve (12) extends parallel to a guide sleeve (7'), which is held in the brake calliper (1) and belongs to an associated guiding element (7).

## Revendications

1. Frein à disque, comprenant un espace de réception d'un étrier (1) de frein, qui a un dispositif (15) de serrage, qui est monté coulissant au moyen d'éléments (7) de guidage sur un support (4) de frein fixé par des vis (6) à un raccord (5) d'essieu et qui comprend un disque (2) de frein, sur lequel des garnitures (3) de frein peuvent être pressées des deux côtés lors d'un freinage, au moins la garniture (3) de frein du côté du serrage étant montée coulissante dans la direction du disque (2) de frein dans un puits de garniture du support (4) de frein, et comprenant un dispositif de reconnaissance visuelle d'une usure de la garniture de frein et/ou du disque de frein, **caractérisé en ce que**, pour reconnaître l'usure, un élément (8) indicateur s'étendant dans le sens opposé au disque (2) de frein est raccordé à au moins une vis (6).

2. Disque de frein suivant la revendication 1, **caractérisé en ce que** l'élément indicateur est fixé sur une tête de la vis (6).

3. Disque de frein suivant la revendication 1 ou 2, **caractérisé en ce que** l'élément (8) indicateur est maintenu à complémentarité de forme ou par frottement sur la tête de la vis (6).

4. Disque de frein suivant l'une des revendications précédentes, **caractérisé en ce que** l'élément (8) indicateur comporte au moins une douille (10) de pression, qui est pressée sur la tête de la vis (6).

5. Disque de frein suivant l'une des revendications précédentes, **caractérisé en ce que** deux douilles (10) de pression sont fixées à un plateau (11), les douilles (10) de pression étant pressées sur les têtes de deux vis (6) disposées l'une à côté de l'autre.

6. Disque de frein suivant l'une des revendications précédentes, **caractérisé en ce qu'**une tige (9) d'indicateur, qui s'étend dans le sens contraire au sens de serrage des garnitures (3) de frein, est formée sur une douille (10) de pression ou sur le plateau (11).

7. Disque de frein suivant l'une des revendications précédentes, **caractérisé en ce que** l'élément (8) indicateur est constitué sous la forme d'une douille (12) formant indicateur, qui est emmanchée sur la tête d'une vis (6).

8. Disque de frein suivant la revendication 7, **caractérisé en ce que** la douille (12) formant indicateur est maintenue, sans pouvoir coulisser, ni tourner, sur la tête de la vis (6) au moyen d'une vis (14) de serrage.

9. Disque de frein suivant l'une des revendications 6 à 8, **caractérisé en ce que** la tige (9) formant indicateur ou la douille (12) formant indicateur comporte des repères, de préférence des repères sous forme de traits.

10. Disque de frein suivant l'une des revendications 6 à 9, **caractérisé en ce que** la tige (9) formant indicateur ou la douille (12) formant indicateur s'étend parallèlement à une douille (7') de guidage, maintenue dans l'étrier (1) de frein d'un élément (7) de guidage associé.
